(19) Europäisches Patentamt / European Patent Office / Office européen des brevets

(11) **EP 4 697 424 A1**

(12) **EUROPEAN PATENT APPLICATION**
published in accordance with Art. 153(4) EPC

(43) Date of publication:
**18.02.2026 Bulletin 2026/08**

(21) Application number: **23933389.1**

(22) Date of filing: **18.04.2023**

(51) International Patent Classification (IPC):
***H01M 10/0525*** (2010.01)

(52) Cooperative Patent Classification (CPC):
**H01M 4/525; H01M 4/583; H01M 10/0525;**
H01M 2004/021; H01M 2220/20; H01M 2300/0025;
Y02E 60/10

(86) International application number:
**PCT/CN2023/089061**

(87) International publication number:
**WO 2024/216510 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde, Fujian 352100 (CN)**

(72) Inventors:
• **JIN, Haizu
   Ningde, Fujian 352100 (CN)**

• **DONG, Miaomiao
   Ningde, Fujian 352100 (CN)**
• **YIN, Ziyi
   Ningde, Fujian 352100 (CN)**
• **WU, Lili
   Ningde, Fujian 352100 (CN)**
• **WU, Longsheng
   Ningde, Fujian 352100 (CN)**
• **SUN, Xin
   Ningde, Fujian 352100 (CN)**

(74) Representative: **Gong, Jinping
   CocreateIP
   Neumarkter Straße 21
   81673 München (DE)**

(54) **SECONDARY BATTERY AND ELECTRICAL APPARATUS**

(57) The present application provides a secondary battery. The secondary battery includes an electrolyte solution and a positive electrode. The electrolyte solution contains an organic lithium salt. The positive electrode includes a positive electrode film layer. The energy density per unit area of the positive electrode film layer on a single side is 18-37 mWh/cm$^2$, and optionally 18-35.7 mWh/cm$^2$. Through the cooperation of the electrolyte solution and the positive electrode, the energy density and the dynamic performance of the battery are both improved.

FIG. 1

**Description**

**TECHNICAL FIELD**

The present application relates to the technical field of secondary batteries, and in particular to a high-energy-density secondary battery and a power consuming apparatus.

**BACKGROUND**

Secondary batteries are widely used in electric vehicles, energy storage systems and mobile electronic devices due to their high energy density, long service life and low self-discharge rate. Because of the great progress made in the field of secondary batteries, higher requirements are put forward for the performance of the secondary batteries.

High-energy-density secondary batteries often have problems such as poor dynamic performance and poor rate performance. How to obtain a secondary battery with excellent comprehensive performance, including energy level and dynamic performance, is an urgent technical problem to be solved in the art.

**SUMMARY**

In view of the above problems, the present application is accomplished to provide a secondary battery having both high energy density and high dynamic performance.

In a first aspect, the present application provides a secondary battery. The secondary battery includes an electrolyte solution and a positive electrode. The electrolyte solution contains an organic lithium salt. The positive electrode includes a positive electrode film layer. An energy density per unit area of the positive electrode film layer on a single side is 18-37 $mWh/cm^2$, and optionally 18-35.7 $mWh/cm^2$.

The organic lithium salt in the electrolyte solution can effectively improve the ionic conductivity of the electrolyte solution, reduce the impedance of the electrolyte solution/electrode interface, form a stable passivation film with good ionic conductivity on the electrode surface, and improve the interface stability. The organic lithium salt in the electrolyte solution can improve the transmission rate of lithium ions in the positive electrode film layer, optimize the dynamic performance and rate performance of the battery, and realize the improvement of both the energy density and the dynamic performance of the secondary battery.

In any embodiment, the positive electrode film layer and the organic lithium salt satisfy a relationship below: $0.005 \leq M-0.0005 \times w \leq 0.2$, where M is the weight content of the organic lithium salt based on the total weight of the electrolyte solution; and w is the areal density of the positive electrode film layer on a single side, in $mg/cm^2$.

To improve the energy density of the battery, the areal density of the positive electrode film layer generally needs to be increased. However, an electrode sheet with a high areal density is not conducive to the ion transmission in the positive electrode film layer, causing the decrease in the dynamic performance and the rate performance of the battery. In the present application, the energy density and the rate performance of the battery are both optimized through the cooperation of the positive electrode film layer and the organic lithium salt. When the positive electrode film layer and the organic lithium salt meet the above relationship, the high-energy-density positive electrode sheet effectively cooperates with the organic lithium salt, to realize the improvement of both the energy density and the dynamic performance of the battery.

In any embodiment, the areal density w of the positive electrode film layer on a single side is not less than 20 $mg/cm^2$, and optionally 25-45 $mg/cm^2$.

By controlling the areal density of the positive electrode film layer on a single side in a suitable range, the battery can be ensured to have both high energy density and high rate performance.

In any embodiment, the organic lithium salt includes at least one of lithium bis(fluorosulfonyl)imide and lithium bis(trifluoromethylsulfonyl)imide.

The organic lithium salt has high ionic conductivity and stable electrochemical properties, can improve the transmission rate of the lithium salt in the positive electrode film layer, reduce the electrode polarization, and improve the dynamic performance of the battery.

In any embodiment, the electrolyte solution further contains an inorganic lithium salt, where the molar ratio of the organic lithium salt to the inorganic lithium salt is 1:5-5:1.

Compared with the organic lithium salt, the inorganic lithium salt has low cost and high voltage tolerance. For example, the inorganic lithium salt includes, but is not limited to, lithium hexafluorophosphate, lithium tetrafluoroborate, lithium hexafluoroarsenate, and lithium perchlorate. When the ratio of the inorganic lithium salt to the organic lithium salt is in a suitable range, the rate performance of the battery can be effectively improved, while the battery cost is reduced.

In any embodiment, the positive electrode film layer contains a positive electrode active material. The positive electrode active material contains particles A and particles B. The particles A are polycrystalline particles, and the volume average particle size of the particles A is larger than that of the particles B.

The positive electrode active material of the present application includes two kinds of particles with different particle sizes. Through the grading of the particles A of large particle size and the particles B of small particle size, the pores between particles can be effectively filled, and the compaction density of the electrode sheet is improved, thus improving the energy density per unit volume of the battery. The polycrystal particles A are prone to cracking between grains during the cycle process of the battery, which is beneficial to the diffusion of lithium ions and facilitates the improvement of the rate performance of the battery. Moreover, the grading of the particles A of large particle size and the particles B of small particle size can also reduce the increase of the consumption of the electrolyte solution and the pore resistance caused by an unduly high pores between particles of the electrode sheet, and improve the rate performance of the battery.

In any embodiment, the positive electrode film layer also at least meets one of the following characteristics:

(1) The particles B are polycrystal, monocrystal or quasi-monocrystal particles.
(2) The primary particle size of the particles A is 50 nm-400 nm, and optionally 80-200 nm; and the primary particle size of the particles B is 150 nm-2 $\mu$m, and optionally 200 nm-1.2 $\mu$m.
(3) The volume average particle size of the particles A is 2-25 $\mu$m and optionally 2.5-23 $\mu$m; and the volume average particle size of the particles B is 0.65-10 $\mu$m, and optionally 1.2-8.5 $\mu$m.
(4) The weight ratio of the particles A to the particles B is 5:5-9:1.
(5) The laser particle size distribution curve of the positive electrode active material has two peaks, and the peak position difference between the two peaks is 3-7 $\mu$m.
(6) The positive electrode includes a positive electrode current collector, and the ratio of the thickness of the positive electrode film layer on a single side to the thickness of the positive electrode current collector is 5.5-15, and optionally 5.6-8.8.

When the positive electrode film layer meets at least one of the above conditions, the battery has high energy density and excellent dynamic performance.

In any embodiment, based on the total moles of transition metal elements in the positive electrode active material, the molar content of element nickel is not less than 80%, optionally, not less than 85%, and further optionally, not less than 90%.

Because of the relatively high content of element nickel, the gravimetric capacity of the positive electrode active material is correspondingly high, which can effectively improve the energy density of the battery.

In any embodiment, the compositions of the particles A and the particles B each independently satisfy Formula I:

$$Li_{a1}Ni_{x1}Co_{y1}Mn_{z1}M1_{d1}O_2M1'_{c1}, \qquad \text{Formula I}$$

where a1 is 0.8-1.2, x1 is 0.85-1, y1 is 0-0.15, z1 is 0-0.15, b1 is 0-0.02, c1=1-x1-y1-z1-b1, M1 includes at least one of Zr, Y, Al, Ti, W, Sr, Ta, Sb, Nb, Na, K, B, Mg, Zn, Ca or Ce, and M1' includes at least one of N, F, S or Cl.

The compositions of the particles A and the particles B contain a high content of nickel, which can improve the energy density of the battery. In addition, the doping of element M1 in the particles A and particles B can reduce the lithium-nickel mixing in the active material in the cycle process, improve the structural stability of the material, and ensure that the positive electrode active material can still maintain a relatively complete structure after lithium ions are deintercalated from the positive electrode during the charge process, thus improving the discharge performance of the battery.

In any embodiment, the positive electrode film layer contains a positive electrode active material, where the positive electrode active material is monocrystal or quasi-monocrystal particles, and satisfies at least one of the following characteristics.

(1) The laser particle size distribution curve of the positive electrode active material has a single peak.
(2) The volume average particle size $D_v50$ of the monocrystal or quasi-monocrystal particles is 1-3.5 $\mu$m, and optionally 1.2-3.0 $\mu$m.
(3) The laser particle size distribution of the monocrystal or quasi-monocrystal particles meets: $0.3\leq(D_v99-D_v90)/(2\times D_v50)\leq0.55$.
(4) The composition of the monocrystal or quasi-monocrystal particles is as shown by Formula II:

$$Li_{a2}Ni_{x2}Co_{y2}Mn_{z2}M2_{b2}O_2M2'_{c2}, \qquad \text{Formula II}$$

where a2 is 0.8-1.2, x2 is 0.85-1, y2 is 0-0.15, z2 is 0-0.15, b2 is 0-0.02, c2=1-x2-y2-z2-b2, M2 includes at least one of Zr, Y, Al, Ti, W, Sr, Ta, Sb, Nb, Na, K, B, Mg, Zn, Ca or Ce, and M2' includes at least one of N, F, S or Cl; and optionally, x2 is 0.90-1.
(5) The positive electrode includes a positive electrode current collector, and the ratio of the thickness of the positive electrode film layer on a single side to the thickness of the positive electrode current collector is 4.5-9, and optionally 4.5-8.5.

The positive electrode material formed of monocrystal particles has a large surface area and a compact structure, so that the positive electrode active material can maintain a good structural stability while having a high compaction density, thereby reducing the side reactions during the charge and discharge process, slowing down the consumption of the electrolyte solution, and prolonging the service life of the battery. The positive electrode active material satisfying the above conditions has good structural stability, so that the battery containing the positive electrode active material can have high energy density and excellent rate performance.

In any embodiment, the pore volume of the positive electrode film layer accounts for 18% to 35% of the total volume of the positive electrode film layer.

When the pore volume of the positive electrode film layer is in a suitable range, the organic lithium salt in the electrolyte solution can easily enter the pores of the positive electrode film layer, and come into full contact with the positive electrode active material, thus improving the migration rate of ions at the electrode/electrolyte interface, reducing the internal resistance of the battery and improving the cycle performance and rate performance of the battery.

In any embodiment, the secondary battery further includes a negative electrode. The negative electrode includes a negative electrode film layer, and the negative electrode film layer contains a negative electrode active material. The negative electrode active material contains a silicon-based material, and the silicon-based material is one or more selected from elemental silicon, a silicon oxide material and a silicon-carbon material. The silicon-based material can significantly improve the energy density of the battery.

In any embodiment, the negative electrode active material further contains a carbon-based material, and the weight ratio of the carbon-based material to the silicon-based material is not more than 4:6, and optionally not more than 2:8.

When the weight ratio of the carbon-based material to the silicon-based material is in the above range, the battery can have high energy density, the expansion of the negative electrode is reduced, and the cycle performance and the rate performance are improved.

In any embodiment, the areal density of the negative electrode film layer is 6-13 mg/cm$^2$.

When the areal density of the negative electrode film layer is in the above range, negative electrode the negative electrode is designed to have a thick coating, which improves the energy density of the battery. A second aspect of the present application provides a power consuming apparatus, which includes a secondary battery according to the first aspect of the present application.

## BRIEF DESCRIPTION OF THE DRAWINGS

Fig. 1 shows a schematic view of a secondary battery cell according to an embodiment of the present application.
Fig. 2 shows an exploded view of the secondary battery cell according to an embodiment of the present application as shown in FIG. 1.
Fig. 3 shows a schematic view of a power consuming apparatus powered by a secondary battery according to an embodiment of the present application.

Description of reference numerals:
5 secondary battery; 51 case; 52 electrode assembly; 53 cover plate.

## DETAILED DESCRIPTION

Hereinafter, the embodiments of the current collector, the secondary battery, the battery module, the battery pack and the power consuming apparatus of the present application are described in detail and specifically disclosed with reference to of the drawings as appropriate. However, there are cases where unnecessary detailed descriptions are omitted. For example, there are cases where detailed descriptions of well-known items and repeated descriptions of actually identical structures are omitted, to avoid unnecessary redundancy in the following descriptions and to facilitate the understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits, with a given range being defined by the selection of a lower limit and an upper limit defining the boundaries of the particular range. A range defined in this manner may be inclusive or exclusive of the end values, and may be arbitrarily combined, that is, any lower limit may be combined with any upper limit to form a range. For example, if ranges of 60-120 and 80-110 are listed for a particular parameter, it is to be understood that ranges of 60-110 and 80-120 are also expected. Additionally, if the minimum range values 1 and 2 and the maximum range values 3, 4 and 5 are listed, the following ranges are all contemplated: 1-3, 1-4, 1-5, 2-3, 2-4 and 2-5. In the present application, unless stated otherwise, the numerical range "a-b" represents an abbreviated representation of any combination of real numbers between a to b, where both a and b are real numbers. For example, the numerical range "0-5" means that all real numbers between 0-5 are listed herein, and "0-5" is merely an abbreviated representation of the combination of these numbers. In addition, when a parameter is expressed as an integer $\geq 2$, it is equivalent to disclosing that the parameter is, for example, an integer of 2, 3, 4, 5, 6, 7, 8, 9, 10, 11, and 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all the steps in the present application can be performed in the order described or in a random order, and preferably in the order described. For example, the method includes steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), include steps (a), (c) and (b), or steps (c), (a) and (b), and the like.

Unless otherwise specifically stated, "comprising" and "including" mentioned in the present application indicate open inclusion or closed inclusion. For example, the "including" and "comprising" may indicate that it is possible to include or comprise other components not listed, and it is also possible to include or comprise the listed components exclusively.

Unless otherwise specified, the term "or" is inclusive in the present application. For example, the phrase "A or B" means "A, B, or both A and B". More specifically, the condition "A or B" is satisfied by any one of the following conditions: A is true (or present) and B is false (or absent); A is false (or absent) and B is true (or present); or both A and B are true (or present).

With the wide use of secondary batteries, increasingly high requirements are raised for the performances of secondary batteries, such as energy density. To improve the energy density of the battery, a design of thick coating of the active material is often used, and then the thick coating of the active material leads to a longer migration path and a greater resistance to migration of lithium ions in the film layer, so the polarization resistance of the electrode sheet increases and the dynamic performance of the battery decreases. Therefore, there is an urgent need to develop a secondary battery with both excellent dynamic performance and improved energy density.

Based on this, the present application provides a secondary battery. Through the cooperation of the electrolyte solution and the positive electrode sheet, the energy density and the dynamic performance of the battery are both improved.

In some embodiments, the secondary battery includes an electrolyte solution and a positive electrode, where the electrolyte solution contains an organic lithium salt. The positive electrode includes a positive electrode film layer. The energy density per unit area of the positive electrode film layer on a single side is 18-37 mWh/cm$^2$, and optionally 18-35.7 mWh/cm$^2$.

The organic lithium salt can generally be formed by introducing one or more electron-withdrawing groups on the basis of an inorganic lithium salt and adjusting and controlling the structure of the anion. The anion of the organic lithium salt generally has a larger radius, more dispersed charge distribution and strong ionization passivation, thus reducing the lattice energy of the lithium salt, weakening the interaction between positive and negative ions, and increasing the solubility of the lithium salt. The organic lithium salt includes, but is not limited to, lithium bis(fluorosulfonyl)imide and lithium bis(trifluoromethylsulfonyl)imide.

In some embodiments, the positive electrode film layer is located on two sides of the current collector. In some embodiments, the positive electrode film layer is located on either side of the current collector. It can be understood that the positive electrode film layer on a single side here refers to the positive electrode film layer on either side of the positive electrode sheet.

The energy density per unit area of the positive electrode film layer can be measured by a method and device commonly used in the art. For example, the energy density per unit area of the positive electrode film layer can be measured as follows. A battery cell is let to stand at a certain temperature (e.g. 25°C) for a certain time (e.g. 2 hrs) to ensure that the temperature of the battery cell is room temperature (e.g. 25°C). At a certain temperature (e.g. 25°C), the battery cell is charged to a charge cut-off voltage at a certain rate (e.g. 0.33C), and then constant-voltage charged at the charge cut-off voltage until the current is 0.05C; and then the charge is stopped (where C represents the rated capacity of the battery cell). The battery cell is let to stand at a certain temperature (e.g. 25°C) for a certain time (e.g. 1 hr), and then discharged to a discharge cut-off voltage at a certain rate (0.33C) at a certain temperature (e.g. 25°C). The total discharge energy is recorded as E0. The battery is disassembled, the positive electrode sheet is removed, and the length and width of the positive electrode film layer are measured with a graduated scale, to obtain the area S0 of the positive electrode film layer. If the positive electrode film layer is coated on both sides, the energy density per unit area of the positive electrode film layer =E0/(2 xS0). If the positive electrode film layer is coated on a single side, the energy density per unit area of the positive electrode film layer =E0/S0.

In some embodiments, the areal density of the positive electrode film layer on a single side is 18 mWh/cm$^2$, 19.3 mWh/cm$^2$, 20 mWh/cm$^2$, 21 mWh/cm$^2$, 22 mWh/cm$^2$, 23 mWh/cm$^2$, 24 mWh/cm$^2$, 25 mWh/cm$^2$, 26 mWh/cm$^2$, 27 mWh/cm$^2$, 28 mWh/cm$^2$, 29 mWh/cm$^2$, 30 mWh/cm$^2$, 31 mWh/cm$^2$, 32 mWh/cm$^2$, 33 mWh/cm, 34 mWh/cm$^2$, 35 mWh/cm$^2$, 35.7 mWh/cm$^2$, 36 mWh/cm$^2$, 37 mWh/cm$^2$, or a value in a range formed by any two of the above points.

The organic lithium salt in the electrolyte solution can effectively improve the ionic conductivity of the electrolyte solution, reduce the impedance of the electrolyte solution/electrode interface, form a stable passivation film with good ionic conductivity on the electrode surface, and improve the interface stability. The organic lithium salt in the electrolyte solution can improve the transmission rate of lithium ions in the positive electrode film layer, optimize the dynamic performance and rate performance of the battery, and realize the improvement of both the energy density and the dynamic performance of the secondary battery.

In some embodiments, the positive electrode film layer and the organic lithium salt satisfy a relationship below: $0.005 \leq M - 0.0005 \times w \leq 0.2$, where M is the weight content of the organic lithium salt based on the total weight of the electrolyte solution; and w is the areal density of the positive electrode film layer on a single side, in mg/cm$^2$.

To improve the energy density of the battery, the areal density of the positive electrode film layer generally needs to be increased. However, an electrode sheet with a high areal density is not conducive to the ion transmission in the positive electrode film layer, causing the decrease in the dynamic performance and the rate performance of the battery. In the present application, the energy density and the rate performance of the battery are both optimized through the cooperation of the positive electrode film layer and the organic lithium salt. When the positive electrode film layer and the organic lithium salt meet the above relationship, the high-energy-density positive electrode sheet effectively cooperates with the organic lithium salt, to realize the improvement of both the energy density and the dynamic performance of the battery.

In some embodiments, the areal density w of the positive electrode film layer on a single side is not less than 20 mg/cm$^2$, and optionally 25-45 mg/cm$^2$.

In some embodiments, the areal density w of the positive electrode film layer on a single side is 20 mg/cm$^2$, 25 mg/cm$^2$, 30 mg/cm$^2$, 35 mg/cm$^2$, 40 mg/cm$^2$, or 45 mg/cm$^2$. By controlling the areal density of the positive electrode film layer on a single side in a suitable range, the battery can be ensured to have both high energy density and high rate performance.

In some embodiments, the organic lithium salt includes at least one of lithium bis(fluorosulfonyl)imide (LiFSI) and lithium bis(trifluoromethylsulfonyl)imide (LiTFSI).

The organic lithium salt has high ionic conductivity and stable electrochemical properties, can improve the transmission rate of the lithium salt in the positive electrode film layer, reduce the electrode polarization, and improve the dynamic performance of the battery.

In some embodiments, the electrolyte solution further contains an inorganic lithium salt, where the molar ratio of the organic lithium salt to the inorganic lithium salt is 1:5-5:1.

Compared with the organic lithium salt, the inorganic lithium salt has low cost and high voltage tolerance. For example, the inorganic lithium salt includes, but is not limited to, lithium hexafluorophosphate, lithium tetrafluoroborate, lithium hexafluoroarsenate, and lithium perchlorate. When the ratio of the inorganic lithium salt to the organic lithium salt is in a suitable range, the rate performance of the battery can be effectively improved, while the battery cost is reduced.

In some embodiments, the positive electrode film layer contains a positive electrode active material. The positive electrode active material contains particles A and particles B. The particles A are polycrystal particles, and the volume average particle size of the particles A is larger than that of the particles B.

Herein, the "volume average particle size", also known as Dv50, refers to the particle size when the cumulative volume of particles reaches 50% in the particle size distribution measurement by laser scattering.

The volume average particle size can be tested by an apparatus and method known in the art. For example, the Microtrac MRB S3500 laser particle size analyzer is used to test the particle size distribution. The specific test process is as follows. 0.05-2 g of the positive electrode active material is added to 10-20 ml of deionized water, ultrasonicated at a frequency of 53 KHz and a power of 120 W for 5 min to ensure that the sample is completely dispersed, and then the sample is determined according to GB/T19077-2016 or ISO 13320:2009 standards. Dv50 of the particles is measured from the particle size volume distribution curve.

Herein, "polycrystal" refers to a crystal composed of many monocrystal particles with different orientations. The whole structure is not penetrated by the same lattice. The structure of each small crystal particle is the same and anisotropic.

The positive electrode active material of the present application includes two kinds of particles with different particle sizes. Through the grading of particles A of large particle size and particles B of small particle size, the pores between particles can be effectively filled, and the compaction density of the electrode sheet is improved, thus improving the energy density per unit volume of the battery. The polycrystal particles A are prone to cracking between grains during the cycle process of the battery, which is beneficial to the diffusion of lithium ions and facilitates the improvement of the rate performance of the battery. Moreover, the grading of particles A of large particle size and particles B of small particle size can also reduce the increase of the consumption of the electrolyte solution and the pore resistance caused by an unduly high pores between particles of the electrode sheet, and improve the rate performance of the battery.

In some embodiments, the particles B are polycrystal, monocrystal or quasi-monocrystal particles.

Herein, "monocrystal" refers to a crystal that grows perfectly and has an internal structure completely conforming to the lattice structure. The monocrystal does not contain grain boundaries in the macro-scale range, and the crystal orientation is consistent everywhere inside.

Herein, "quasi-monocrystal" refers to a crystal with a small number of grains and a large grain size.

The particles B are polycrystal, which can further improve the rate performance of the battery. The particles B is monocrystal or quasi-monocrystal, which can improve the structural stability of the positive electrode active material during the cycle process.

In some embodiments, the primary particle size of the particles A is 50 nm-400 nm, and optionally 80-200 nm; and the primary particle size of the particles B is 150 nm-2 $\mu$m, and optionally 200 nm-1.2 $\mu$m.

In some embodiments, the primary particle size of the particles A is any one of 50nm, 60nm, 70nm, 80nm, 90nm, 100nm, 110nm, 120nm, 130nm, 140nm, 150nm, 160nm, 170nm, 180nm, 190nm, 200nm, 250nm, 300nm, 350nm, or 400nm, or any value therebetween.

In some embodiments, the primary particle size of the particles B is any one of 150nm, 200nm, 300nm, 400nm, 500nm, 600nm, 700nm, 800nm, 900nm, 1$\mu$m, 1.1$\mu$m, 1.2$\mu$m, 1.3$\mu$m, 1.4$\mu$m, 1.5$\mu$m, 1.6$\mu$m, 1.7$\mu$m, 1.8$\mu$m, 1.9$\mu$m, or 2$\mu$m, or any value therebetween. Herein, "primary particle size" refers to the particle size of primary particles.

Herein, "primary particles" refers to solid basic particles obtained by dispersion or refinement without changing the essential structure of a material. The primary particles are particles that have not formed into an agglomerated state.

In some embodiments, the volume average particle size of the particles A is 2-25 $\mu$m, and optionally 2.5-23 $\mu$m; and the volume average particle size of the particles B is 0.65-10 $\mu$m, and optionally 1.2-8.5 $\mu$m.

In some embodiments, the volume average particle size of the particles A is any one of 2$\mu$m, 2.5$\mu$m, 3$\mu$m, 4$\mu$m, 5$\mu$m, 6$\mu$m, 7$\mu$m, 8$\mu$m, 9$\mu$m, 10$\mu$m, 11$\mu$m, 12$\mu$m, 13$\mu$m, 14$\mu$m, 15$\mu$m, 16$\mu$m, 17$\mu$m, 18$\mu$m, 19$\mu$m, 20$\mu$m, 21$\mu$m, 22$\mu$m, 23$\mu$m, 24$\mu$m, or 25$\mu$m, or any value therebetween.

In some embodiments, the volume average particle size of the particles B is any one of 0.65$\mu$m, 1$\mu$m, 2$\mu$m, 3$\mu$m, 4$\mu$m, 5$\mu$m, 6$\mu$m, 7$\mu$m, 8$\mu$m, 8.5$\mu$m, 9$\mu$m, or 10$\mu$m, or any value therebetween. It can be understood that the volume average particle size can be either primary particle size or secondary particle size. In some embodiments, for monocrystal materials, the volume average particle size is primary particle size. In some embodiments, for polycrystal materials, the volume average particle size is the secondary particle size after agglomeration of the primary particles.

The volume average particle size of the polycrystal particles A is larger than that of the polycrystal particles B. The migration path of lithium ions in the particles A is long, and the primary particle size is small, which promotes the rapid migration of lithium ions and balances the dynamic performance.

In some embodiments, the weight ratio of the particles A to the particle B is 5:5 to 9:1. In some embodiments, the laser particle size distribution curve of the positive electrode active material has two peaks, and the peak position difference between the two peaks is 3-7 $\mu$m.

In some embodiments, the weight ratio of the particles A to the particle B is any one of 1, 2, 3, 4, 5, 6, 7, 8, or 9, or any value therebetween.

In some embodiments, the laser particle size distribution curve of the positive electrode active material has two peaks, and the peak position difference between the two peaks is any one of 3$\mu$m, 4$\mu$m, 5$\mu$m, 6$\mu$m, or 7$\mu$m, or any value therebetween. Through the weight combination and/or particle size combination of large and small particles, the compaction density of the electrode sheet can be further improved and the volumetric energy density of the battery can be improved.

In some embodiments, the positive electrode includes a positive electrode current collector, and the positive electrode film layer contains a positive electrode active material. The positive electrode active material includes particles A and particles B. The ratio of the thickness of the positive electrode film layer on a single side to the thickness of the positive electrode current collector is 5.5-15, and optionally 5.6-8.8.

When the ratio of the thickness of the positive electrode film layer on a single side to the thickness of the positive electrode current collector is in this range, the energy density per unit area of the positive electrode film layer can be improved.

When the positive electrode film layer meets the above conditions, the positive electrode sheet achieves an improved compaction density of the electrode sheet through the combination of the positive electrode active material, so that the battery containing the positive electrode active material has both high energy density and excellent rate performance.

In some embodiments, based on the total moles of transition metal elements in the positive electrode active material, the molar content of element nickel is not less than 80%, optionally, not less than 85%, and further optionally, not less than 90%.

In some embodiments, based on the total moles of transition metal elements in the positive electrode active material, the molar content of element nickel is 80%, 81%, 82%, 83%, 84%, 85%, 86%, 87%, 88%, 89%, 90%, 91%, 92%, 93%, 94%, 95%, 96%, 97%, 98%, 99%, or 100%.

Because of the relatively high content of element nickel, the gravimetric capacity of the positive electrode active material is correspondingly high, which can effectively improve the energy density of the battery.

In some embodiments, the compositions of the particles A and the particles B each independently satisfy Formula I:

$$Li_{a1}Ni_{x1}Co_{y1}Mn_{z1}M1_{d1}O_2M1'_{c1}, \qquad \text{Formula I}$$

where a1 is 0.8-1.2, x1 is 0.85-1, y1 is 0-0.15, z1 is 0-0.15, b1 is 0-0.02, c1=1-x1-y1-z1-b1, M1 includes at least one of Zr, Y, Al, Ti, W, Sr, Ta, Sb, Nb, Na, K, B, Mg, Zn, Ca or Ce, and M1' includes at least one of N, F, S or Cl.

In some embodiments, a1 is optionally 0.8, 0.9, 1.0, 1.1, or 1.2, or any value therebetween.

In some embodiments, b1 is optionally 0, 0.01, or 0.02, or any value therebetween.

In some embodiments, x1 is optionally 0.85, 0.9, 0.95, or 1, or any value therebetween. In some embodiments, y1 is optionally 0, 0.01, 0.02, 0.03, 0.04, 0.05, 0.06, 0.07, 0.08, 0.09, 0.1, 0.11, 0.12, 0.13, 0.14, or 0.15, or any value therebetween.

In some embodiments, z1 is optionally 0, 0.01, 0.02, 0.03, 0.04, 0.05, 0.06, 0.07, 0.08, 0.09, 0.1, 0.11, 0.12, 0.13, 0.14, or 0.15, or any value therebetween.

In some embodiments, the particles A and the particles B have the same composition.

In some embodiments, the particles A and the particles B have different compositions.

The compositions of the particles A and the particles B contain a high content of nickel, which can improve the energy density of the battery. In addition, the doping of element M1 in the particles A and particles B can reduce the lithium-nickel mixing in the active material in the cycle process, improve the structural stability of the material, and ensure that the positive electrode active material can still maintain a relatively complete structure after lithium ions are deintercalated from the positive electrode during the charge process, thus improving the discharge performance of the battery.

In some embodiments, the positive electrode film layer contains a positive electrode active material, where the positive electrode active material is monocrystal or quasi-monocrystal particles, and the laser particle size distribution curve of the positive electrode active material has a single peak.

In some embodiments, the positive electrode film layer contains a positive electrode active material, where the positive electrode active material is monocrystal or quasi-monocrystal particles, and the monocrystal or quasi-monocrystal particles have a volume average particle size $D_v50$ of 1-3.5 $\mu$m and optionally 1.2-3.0 $\mu$m.

In some embodiments, the positive electrode film layer contains a positive electrode active material, where the positive electrode active material is monocrystal or quasi-monocrystal particles, and the monocrystal or quasi-monocrystal particles have a volume average particle size $D_v50$ of 1 $\mu$m, 1.2 $\mu$m, 2 $\mu$m, 2.5 $\mu$m, 3 $\mu$m, or 3.5 $\mu$m, or any value therebetween.

In some embodiments, the positive electrode film layer contains a positive electrode active material, where the positive electrode active material is monocrystal or quasi-monocrystal particles, and the laser particle size distribution of the monocrystal or quasi-monocrystal particles meets: $0.3 \leq (D_v99-D_v90)/(2 \times D_v50) \leq 0.55$.

In some embodiments, the positive electrode film layer contains a positive electrode active material, where the positive electrode active material is monocrystal or quasi-monocrystal particles, and the laser particle size distribution $(D_v99-D_v90)/(2 \times D_v50)$ of the monocrystal or quasi-monocrystal particles is 0.3, 0.35, 0.4, 0.45, 0.5, or 0.55, or any value therebetween.

In some embodiments, the positive electrode film layer contains a positive electrode active material, where the positive electrode active material is monocrystal or quasi-monocrystal particles, and the monocrystal or quasi-monocrystal particles have a composition of Formula II:

$$Li_{a2}Ni_{x2}Co_{y2}Mn_{z2}M2_{b2}O_2M2'_{c2}, \qquad \text{Formula II}$$

where a2 is 0.8-1.2, x2 is 0.85-1, y2 is 0-0.15, z2 is 0-0.15, b2 is 0-0.02, c2=1-x2-y2-z2-b2, M2 includes at least one of Zr, Y, Al, Ti, W, Sr, Ta, Sb, Nb, Na, K, B, Mg, Zn, Ca or Ce, and M2' includes at least one of N, F, S or Cl; and optionally, x2 is 0.90-1.

In some embodiments, a2 is optionally 0.8, 0.9, 1.0, 1.1, or 1.2, or any value therebetween.

In some embodiments, b2 is optionally 0, 0.01, or 0.02, or any value therebetween.

In some embodiments, x2 is optionally 0.85, 0.9, 0.95, or 1, or any value therebetween. In some embodiments, y2 is optionally 0, 0.01, 0.02, 0.03, 0.04, 0.05, 0.06, 0.07, 0.08, 0.09, 0.1, 0.11, 0.12, 0.13, 0.14, or 0.15, or any value therebetween.

In some embodiments, z2 is optionally 0, 0.01, 0.02, 0.03, 0.04, 0.05, 0.06, 0.07, 0.08, 0.09, 0.1, 0.11, 0.12, 0.13, 0.14, or 0.15, or any value therebetween. In some embodiments, the positive electrode includes a positive electrode current collector, and the positive electrode film layer contains a positive electrode active material. The positive electrode active material is monocrystal or quasi-monocrystal particles. The ratio of the thickness of the positive electrode film layer on a single side to the thickness of the positive electrode current collector is 4.5-9, and optionally 4.5-8.5.

The positive electrode material formed of monocrystal particles has a large surface area and a compact structure, so that the positive electrode active material can maintain a good structural stability while having a high compaction density, thereby reducing the side reactions during the charge and discharge process, slowing down the consumption of the electrolyte solution, and prolonging the service life of the battery. The positive electrode active material satisfying the above conditions has good structural stability, so that the battery containing the positive electrode active material can have high energy density, excellent rate performance, and long cycle life.

In some embodiments, the pore volume of the positive electrode film layer accounts 18% to 35% of the total volume of the positive electrode film layer.

When the pore volume of the positive electrode film layer is in a suitable range, the organic lithium salt in the electrolyte solution can easily enter the pores of the positive electrode film layer, and come into full contact with the positive electrode active material, thus improving the migration rate of ions at the electrode/electrolyte interface, reducing the internal resistance of the battery and improving the rate performance of the battery.

In some embodiments, the secondary battery further includes a negative electrode. The negative electrode includes a negative electrode film layer, and the negative electrode film layer contains a negative electrode active material. The negative electrode active material contains a silicon-based material, and the silicon-based material is one or more selected from elemental silicon, a silicon oxide material and a silicon-carbon material.

The silicon-based material can significantly improve the energy density of the battery.

In some embodiments, the negative electrode active material further contains a carbon-based material, and the weight ratio of the carbon-based material to the silicon-based material is not more than 4:6, and optionally not more than 2:8.

In some embodiments, the weight ratio of the carbon-based material to the silicon-based material is not more than 4:6, 4:7, 4:8, 4:9, 4:10, 4:11, 4:12, 4:13, 4:14, 4:15, 2:8, or any value therebetween. When the weight ratio of the carbon-based material to the silicon-based material is in the above range, the battery can have high energy density, the expansion of the negative electrode is reduced, and the cycle performance and the rate performance are improved.

In some embodiments, the areal density of the negative electrode film layer is 6-13 mg/cm$^2$.

In some embodiments, the areal density of the negative electrode film layer is 6 mg/cm$^2$, 7mg/cm$^2$, 8 mg/cm$^2$, 9 mg/cm$^2$, 10 mg/cm$^2$, 11 mg/cm$^2$, 12 mg/cm$^2$, 13 mg/cm$^2$, or any value therebetween.

When the areal density of the negative electrode film layer is in the above range, the negative electrode is designed to have a thick coating, which improves the energy density of the battery.

In some embodiments, the negative electrode sheet includes a negative electrode current collector, and a negative electrode film layer according to any embodiment arranged on at least one side of the negative electrode current collector.

For example, the negative electrode current collector has two opposite surfaces in its own thickness direction, and the negative electrode film layer is provided on either one or both of the two opposite surfaces of the negative electrode current collector.

In some embodiments, the negative electrode current collector can be a metal foil or a composite current collector. For example, a copper foil can be used as the metal foil. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the negative electrode film layer further optionally includes a binder. The binder may be at least one selected from styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be at least one selected from superconducting carbon, acetylene black, carbon black, Ketjen black, carbon dot, carbon nanotubes, graphene, and carbon nanofibers.

In some embodiments, the negative electrode film layer may further optionally include other auxiliaries, for example, a thickener (e. g., sodium carboxymethyl cellulose (CMC-Na)) and the like.

In some embodiments, the negative electrode sheet can be prepared by dispersing the components for preparing the negative electrode sheet, for example, the negative electrode active material, the conductive agent, the binder and any other components in a solvent (for example, deionized water) to form a negative electrode slurry; and applying the negative electrode slurry on a negative electrode current collector, followed by oven drying, cold pressing and other procedures, to obtain the negative electrode sheet.

In some embodiments, the positive electrode sheet includes a positive electrode current collector, and a positive electrode film layer according to any embodiment arranged on at least one side of the positive electrode current collector.

For example, the positive electrode current collector has two opposite surfaces in its own thickness direction, and the positive electrode film layer is arranged on either or both of the two opposite surfaces of the positive electrode current collector.

In some embodiments, the positive electrode current collector can be a metal foil or a composite current collector. For example, an aluminum foil can be used as the metal foil. The composite current collector may include a polymer material substrate and a metal layer formed on at least one surface of the polymer material substrate. The composite current collector can be formed by forming a metal material (aluminium, aluminium alloy, nickel, nickel alloy, titanium, titanium alloy, silver and silver alloy, etc.) on a high molecular material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. For example, the binder may include at least one of polyvinylidene difluoride (PVDF), polytetrafluoroethylene (PTFE), a vinylidene difluoride-tetrafluoroethylene-propylene terpolymer, a vinylidene difluoride-hexafluoropropylene-tetrafluoroethyleneterpolymer, a tetrafluoroethylene-hexafluoropropylene copolymer and a fluorine-containing acrylate resin.

In some embodiments, the positive electrode film layer also optionally includes a conductive agent. For example, the conductive agent may include at least one of superconducting carbon, acetylene black, carbon black, Ketjen black, carbon dot, carbon nanotubes, graphene, and carbon nanofibers.

In some embodiments, the positive electrode sheet can be prepared by dispersing the components for preparing the positive electrode sheet, for example, the positive electrode active material, the conductive agent, the binder and any other components in a solvent (for example, N-methyl pyrrolidone) to form a positive electrode slurry; and applying the positive electrode slurry on a positive electrode current collector, followed by oven drying, cold pressing and other procedures, to obtain the positive electrode sheet.

In some embodiments, the secondary battery further includes a separator. The type of the separator is not particularly limited in the present application, and any well-known separator with a porous structure having good chemical stability and mechanical stability can be used.

In some embodiments, the material of the separator may be at least one selected from glass fiber, non-woven cloth, polyethylene, polypropylene, and polyvinylidene fluoride. The separator may be a single-layer film or a multi-layer composite film, which is not particularly limited. When the separator is a multi-layer composite film, and the material of each layer may be the same or different, which is not particularly limited.

In an embodiment of the present application, a power consuming apparatus is provided, which includes a secondary battery according to any embodiment.

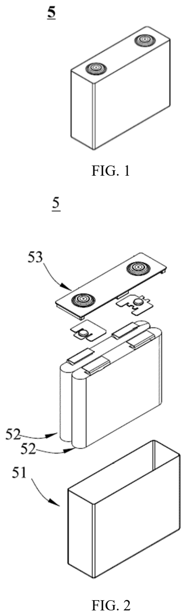

The shape of the secondary battery is not particularly limited in the present application, and it may be cylindrical, square, or any other shape. For example, Fig. 1 shows an example of a secondary battery 1 having a square structure.

In some embodiments, referring to Fig. 2, an outer package may include a case 11 and a cover plate 13. Here, the case 11 can include a bottom plate and a side plate connected to the bottom plate, where the bottom plate and the side plate define an accommodating cavity. The case 11 has an opening that communicates with the accommodating cavity, and the cover plate 13 can cover the opening to close the accommodating cavity. The positive electrode sheet, the negative electrode sheet, and the separator may be wound or stacked to form an electrode assembly 12. The electrode assembly 12 is encapsulated within the accommodating cavity. The electrolyte solution impregnates the electrode assembly 12. The number of electrode assemblies 12 included in the secondary battery 1 may be one or more, which can be selected by those skilled in the art according to specific actual requirements.

The power consuming apparatus includes a secondary battery provided in the present application. The secondary battery can be used as a power source for the power consuming apparatus, and can also be used as an energy storage unit for the power consuming apparatus. The power consuming apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, and an energy storage system, etc.

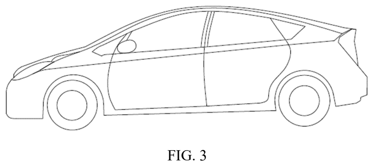

FIG. 3 shows an example of a power consuming apparatus. The power consuming apparatus is an all-electric vehicle, a hybrid electric vehicle, or a plug-in hybrid electric vehicle, etc. In order to meet the requirements of the power consuming apparatus for high power and high energy density of secondary batteries, a battery pack or a battery module may be used.

The apparatus may also be, for example, a mobile phone, a tablet computer, and a laptop, etc. The apparatus is generally required to be light and thin, and can use a secondary battery as a power source.

**Examples**

Examples of the present application will be described hereinafter. The examples described below are exemplary and only used to explain the present application, and should not be construed as a limitation on the present application. Where specific techniques or conditions are not indicated in the examples, the techniques or conditions described in the literatures in the art or described in the product specifications are followed. The reagents or instruments for which no manufacturers are noted are all common products commercially available from the market.

I. Preparation method

1. Preparation of positive electrode sheet

Preparation of positive electrode active material: According to the stoichiometric ratio shown by the chemical formula, lithium hydroxide and dried high-nickel ternary precursor were weighed. The mixture was evenly mixed in a high-speed mixer and sintered in a kiln at a sintering temperature of 760°C for a sintering time of 20 hrs under a sintering atmosphere of oxygen. After cooling, a matrix material was obtained. The material was washed with water for 30 min according to a weight ratio of 1:1, centrifuged, filtered, and then dried by vibration at a frequency of 30 Hz for a drying time of 5 hrs, to obtain a positive electrode active material. In this sintering process, the primary particle size was adjusted by adjusting the sintering temperature, and the secondary particle size was adjusted by adjusting the precursor particle size.

The positive electrode active material had a composition of $LiNi_{0.93}Co_{0.05}Mn_{0.01}Al_{0.005}N_{0.005}O_2$, where the primary particle size of the particles A was 200 nm, and the volume average particle size was 10 $\mu$m; the primary particle size of the particles B was 1 $\mu$m, and the volume average particle size was 5 $\mu$m; and the weight ratio of the particles A to the particles B was 4:1.

The weight ratio of the positive electrode active material, the conductive agent carbon black and the binder polyvinylidene fluoride (PVDF) were mixed uniformly according to a weight ratio of 97%: 1%: 2% in N-methylpyrrolidone (NMP), to prepare a positive electrode slurry. Then, the positive electrode slurry was evenly coated on a positive electrode current collector, and coated on the surface of the aluminum foil by an extrusion coater and dried. The coated electrode sheet was cold-pressed by a cold press. Finally, a positive electrode sheet was prepared.

2. Preparation of negative electrode sheet

The negative electrode active materials artificial graphite and carbon-silicon material, the conductive agents carbon black and carbon nanotubes, the binder styrene-butadiene rubber (SBR) and the thickener sodium hydroxymethylcellulose (CMC-Na) were mixed at a weight ratio of 60.48: 34.02: 1: 0.375: 2.8: 1.325, and fully stirred and mixed in a proper amount of deionized water to form a uniform negative electrode slurry. The negative electrode slurry was coated on a negative electrode current collector, followed by drying and other procedures, to obtain a negative electrode film layer. The negative electrode film layer had an areal density of 9.4 mg/cm$^2$.

3. Separator

A polyethylene (PE) film was used as the separator.

4. Electrolyte solution

Ethylene carbonate, methyl ethyl carbonate and diethyl carbonate were mixed according to a volume ratio of 1: 1: 1 to obtain an organic solvent. The fully dried lithium salt $LiPF_6$ was dissolved in the mixed organic solvent, to prepare an electrolyte solution containing 1 mol/L $LiPF_6$. Then 10 wt% LiFSI was added and mixed evenly.

5. Preparation of battery

The positive electrode sheet, the separator, and the negative electrode sheet were stacked in sequence, so that the separator was located between the positive electrode sheet and the negative electrode sheet for separation. The electrolyte solution was added, and a button battery was obtained after assembly.

The specific parameters are listed in Table 1.

Example 2

The preparation method in Example 2 was substantially the same as that in Example 1, except that the type of the organic lithium salt was adjusted. The specific parameters were shown in Table 1.

Examples 3-6

The preparation method in Examples 3-6 was substantially the same as that in Example 1, except that the weight content of the organic lithium salt was adjusted. The specific parameters were shown in Table 1.

Example 7

The preparation method in Example 7 was substantially the same as that in Example 1, except that the particles B in the positive electrode active material was a monocrystal. The specific parameters were shown in Table 1.

Examples 8-12

The preparation method in Examples 8-12 was substantially the same as that in Examples 1, except that the weight content of the organic lithium salt and the areal density of the positive electrode film layer were adjusted. The specific parameters were shown in Table 1.

Examples 13-16

The preparation method in Examples 13-16 was substantially the same as that in Example 1, except that the composition of the positive electrode active material particles was adjusted. The specific parameters were shown in Table 1. In Example 13-Example 15, the primary particle size of the particles A and the particles B was adjusted by adjusting the sintering temperature, and the secondary particle size was obtained by preparing precursors with different particle sizes. In Examples 16, the positive electrode active material only had one type of single crystal particles.

Comparative Example 1

The preparation method in Comparative Example 1 was substantially the same as that in Example 1, except that the electrolyte solution in Comparative Example 1 only includes an inorganic lithium salt, but not an organic lithium salt. The specific parameters were shown in Table 1.

Comparative Example 2

The preparation method in Comparative Example 2 was substantially the same as that in Examples 1, except that the areal density of the positive electrode film layer was adjusted. The specific parameters were shown in Table 1.

II. Performance test

1. Test of gravimetric energy density and energy density per unit area

1) The discharge energy of the battery cell was determined as follows.

The battery cell was allowed to stand at 25°C for 2 hrs to ensure that the temperature of the battery cell was 25°C.
At 25°C, the battery cell was charged to a charge cut-off voltage at 0.1C, and then constant-voltage charged at the charge cut-off voltage until the current was 0.05C; and then the charge was stopped (where C was the rated capacity of the battery cell).
The battery cell was allowed to stand at 25°C for 1 hrs.
At 25°C, the battery cell was discharged to a discharge cut-off voltage at 0.1C, and the total discharge capacity C0 of the battery cell was recorded, and the total discharge energy was E0.
2) The weight of the battery cell was determined as follows.
The battery cell was placed on an electronic balance until the weight is stable, and the weight value M0 of the battery cell was read.
3) The area of the battery cell was determined as follows.
The length and width of the battery cell were measured with a scale, and the area value S0 of the battery cell was obtained.

4) The energy density of the battery cell is calculated by a formula below:

Gravimetric energy density of battery = Discharge energy E0 of battery cell/Weight M0 of battery cell

5) The energy per unit area of the battery was calculated by a formula as follows.

If the battery was coated with a positive active material on both sides, the energy per unit area of the battery = the discharge energy E0 of the battery cell/(2 x the area of the positive electrode film layer).

If the battery was coated with a positive active material on a single side, the energy per unit area of the battery = the discharge energy E0 of the battery cell/the area of the positive electrode film layer.

2. Cycle performance

At 25°C under normal pressure (0.1 MPa), the battery was charged at a constant current of 0.1C to a voltage of 4V, then charged at a constant voltage of 4V to a current of 0.01C, and then discharged at a constant current of 1C to a voltage of 3.0V. This was a charge-discharge cycle. The first discharge capacity was set to 100%. 500 charge-discharge cycles were repeated, and the test was stopped. The cycle capacity retention rate was recorded, and the capacity retention rate was used as an index to evaluate the cycle performance of the battery.

3. Dynamic performance

Charge rate test

At 25°C, the battery was fully charged at x C and fully discharged at 1C for 10 cycles. Then the battery was fully charged at x C. Then, the negative electrode sheet was disassembled, and the lithium plating on the surface of the negative electrode sheet was observed. If there was no lithium plating on the surface of the negative electrode, the charge rate x C was increased by 0.1C stepwise for test, until lithium plating occurred on the surface of the negative electrode. The test was stopped. At this time, the charge rate minus 0.1C was the maximum charge rate of the battery.

Discharge rate performance

At 25°C, the battery was fully charged at 0.33C and then constant-voltage charged to a cut-off current of 0.05C. Then, the battery was fully discharged at 0.33C. C0 at this time was recorded as the initial capacity. Then, the battery was fully charged at 0.33C and then constant-voltage charged to a cut-off current of 0.05C. Then, the battery was fully discharged at 2C. The capacity C1 at this time was recorded. The discharge capacity retention rate at 2C was C1/C0.

4. Determination method for areal density of positive electrode film layer and negative electrode film layer

Areal density of positive electrode film layer and negative electrode film layer =m/S, where m represents the weight of the film layer, and S represents the area of the film layer. m can be obtained by subtracting the weight of the current collector from the weight of electrode sheet, and the length and width of the film layer can be measured by a scale. If the electrode sheet is coated with a film layer on two sides, the areal density of the film layer is (weight of electrode sheet - weight of current collector) /(2 xarea of film layer).

5. Particle size test

For example, the Microtrac MRB S3500 laser particle size analyzer was used to test the particle size distribution. The specific test process was as follows. 0.05-2 g of the positive electrode active material was added to 10-20 ml of deionized water, and ultrasonicated at a frequency of 53 KHz and a power of 120 W for 5 min to ensure that the sample was completely dispersed, and then the sample was determined according to GB/T19077-2016 or ISO 13320:2009 standards. The volume average particle size and difference between peak positions of the particles were determined from the volume particle size distribution curve. The cross section of the particles was observed by scanning electron microscopy and the primary particle size was tested.

Table 1

| No. | Organic lithium salt | Inorganic lithium salt | Content of organic lithium salt, M | Areal density w of positive electrode film layer (mg/cm2) | M-0.0005*w | Primary particle size of particles A (nm) | Volume average particle size of particles A (μm) | Primary particle size of particles B (nm) | Volume average particle size of particles B (μm) | mA : mB | Thickness ratio of positive electrode film layer to current collector | Energy density per unit area, mWh/cm2 | Maximum charge rate/25°C | Discharge capacity retention rate at 2C and 25°C |
|---|---|---|---|---|---|---|---|---|---|---|---|---|---|---|
| Example 1 | LiFSI | LiPF6 | 10.00% | 35 | 0.0825 | 200 | 10 | 1000 | 5 | 4 | 8.2 | 25.5 | 1.20C | 95.5% |
| Example 2 | LiTFS I | LiPF6 | 10.00% | 35 | 0.0825 | 200 | 10 | 1000 | 5 | 4 | 8.2 | 25.5 | 1.10C | 95.0% |
| Example 3 | LiFSI | LiPF6 | 0.01% | 35 | -0.0174 | 200 | 10 | 1000 | 5 | 4 | 8.2 | 25.5 | 0.45C | 87.8% |
| Example 4 | LiFSI | LiPF6 | 20.00% | 35 | 0.1825 | 200 | 10 | 1000 | 5 | 4 | 8.2 | 25.5 | 0.80C | 92.4% |
| Example 5 | LiFSI | LiPF6 | 30.00% | 35 | 0.2825 | 200 | 10 | 1000 | 5 | 4 | 8.2 | 25.5 | 0.70C | 91.3% |
| Example 6 | LiFSI | LiPF6 | 0.10% | 35 | -0.0165 | 200 | 10 | 1000 | 5 | 4 | 8.2 | 25.5 | 0.60C | 95.5% |
| Example 7 | LiFSI | LiPF6 | 10.00% | 35 | 0.0825 | 200 | 10 | 1000 | / | 4 | 8.2 | 25.5 | 1.10C | 94.0% |
| Example 8 | LiFSI | LiPF6 | 10.00% | 25 | 0.0875 | 200 | 10 | 1000 | 5 | 4 | 5.7 | 18.2 | 1.40C | 96.0% |
| Example 9 | LiFSI | LiPF6 | 20.00% | 45 | 0.1775 | 200 | 10 | 1000 | 5 | 4 | 10.5 | 32.7 | 0.95C | 90.7% |
| Example 10 | LiFSI | LiPF6 | 10.00% | 45 | 0.0775 | 200 | 10 | 1000 | 5 | 4 | 10.5 | 32.7 | 1.00C | 91.2% |
| Example 11 | LiFSI | LiPF6 | 30.00% | 45 | 0.2775 | 200 | 10 | 1000 | 5 | 4 | 10.5 | 32.7 | 0.80C | 89.1% |
| Example 12 | LiFSI | LiPF6 | 10.00% | 50 | 0.075 | 200 | 10 | 1000 | 5 | 4 | 12.0 | 36.4 | 0.80C | 95.5% |
| Example 13 | LiFSI | LiPF6 | 10.00% | 35 | 0.0825 | 200 | 10 | 200 | 10 | 4 | 8.2 | 25.5 | 1.00C | 89.8% |

EP 4 697 424 A1

14

| No. | Organic lithium salt | Inorganic lithium salt | Content of organic lithium salt, M | Areal density w of positive electrode film layer (mg/cm2) | M-0.0005*w | Primary particle size of particles A (nm) | Volume average particle size of particles A ($\mu$m) | Primary particle size of particles B (nm) | Volume average particle size of particles B ($\mu$m) | mA : mB | Thickness ratio of positive electrode film layer to current collector | Energy density per unit area, mWh/cm2 | Maximum charge rate/25°C | Discharge capacity retention rate at 2C and 25°C |
|---|---|---|---|---|---|---|---|---|---|---|---|---|---|---|
| Example 14 | LiFSI | LiPF6 | 10.00% | 35 | 0.0825 | 400 | 25 | 2000 | 10 | 4 | 8.2 | 25.5 | 1.05C | 86.0% |
| Example 15 | LiFSI | LiPF6 | 10.00% | 35 | 0.0825 | 50 | 2 | 150 | 1 | 4 | 8.2 | 25.5 | 1.20C | 96.5% |
| Example 16 | LiFSI | LiPF6 | 10.00% | 35 | 0.0825 | Monocrystal particles, Dv50=2.5$\mu$m, (Dv99-Dv90) /(2*Dv50)=0.46 | | | | / | 8.2 | 25.0 | 1.05C | 92.5% |
| Comparative Example 1 | / | LiPF6 | 10.00% | 35 | 0.0825 | 200 | 10 | 1000 | 5 | 4 | 8.2 | 25.5 | 0.40C | 85.0% |
| Comparative Example 2 | LiFSI | LiPF6 | 10.00% | 10 | 0.095 | 200 | 10 | 1000 | 5 | 4 | 2.1 | 10.4 | 1.50C | 97.0% |

The test results of the examples and comparative examples are shown in Table 1.

As can be known from the above results, the secondary battery in Examples 1-16 includes an electrolyte solution and a positive electrode. The positive electrode includes a positive electrode film layer. The energy density per unit area of the positive electrode film layer on a single side meets 18-37 mWh/cm$^2$.

The electrolyte solution in the secondary battery in Comparative Example 1 includes an inorganic lithium salt and no organic lithium salt. Compared with Comparative Example 1, the batteries of Examples 1-16 have high energy density and excellent dynamic performance, and improved discharge capacity retention rates at the maximum charge rate and high rate are.

It can be seen from Examples 1-12 that when the positive electrode film layer and the organic lithium salt meet the relationship: 0.005≤M-0.0005×w≤0.2, the organic lithium salt can effectively cooperate with the positive electrode film layer, so that the battery has a high capacity retention rate at a charge rate or a high charge rate, that is, the dynamic performance of the battery is improved.

From the comparison between Examples 1-16 and Comparative Example 2, it can be seen that when the areal density w of the positive electrode film layer is not less than 20mg/cm$^2$ and is optionally 25-45mg/cm$^2$, the battery has a high energy density.

It can be seen from Examples 1 and 13-15 that the dynamic performance of the battery can be improved through the grading of particles A and B.

From the comparison of Example 1, Example 7 and Example 16, it can be seen that the small particles of the positive electrode active material are polycrystal compared with the single crystal included in the positive electrode active material, which is beneficial to improving the dynamic performance of the battery.

From the comparison between Example 1 and Examples 13-16, it can be seen that when the positive electrode active material includes particles A and particles B, and both particles A and particles B have two different particle sizes, the energy density and dynamic performance of the battery are further improved.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

**Claims**

1. A secondary battery, comprising:

   an electrolyte solution, the electrolyte solution comprising an organic lithium salt; and
   a positive electrode, the positive electrode comprising a positive electrode film layer, and an energy density per unit area of the positive electrode film layer on a single side being 18-37 mWh/cm$^2$ and optionally 18-35.7 mWh/cm$^2$.

2. The secondary battery according to claim 1, wherein the positive electrode film layer and the organic lithium salt satisfy a relationship below:

$$0.005 \leq M-0.0005 \times w \leq 0.2$$

   where M is a weight content of the organic lithium salt based on a total weight of the electrolyte solution; and w is an areal density of the positive electrode film layer on a single side, in mg/cm$^2$.

3. The secondary battery according to claim 1 or 2, wherein the areal density w of the positive electrode film layer on a single side is 20 mg/cm$^2$, and optionally 25-45 mg/cm$^2$.

4. The secondary battery according to any one of claims 1 to 3, wherein the organic lithium salt comprises at least one of lithium bis(fluorosulfonyl)imide and lithium bis(trifluoromethylsulfonyl)imide.

5. The secondary battery according to any one of claims 1 to 4, wherein the electrolyte solution comprises an inorganic lithium salt, and the molar ratio of the organic lithium salt to the inorganic lithium salt is 1:5-5:1.

6. The secondary battery according to any one of claims 1 to 5, wherein the positive electrode film layer comprises a positive electrode active material, the positive electrode active material comprises particles A and particles B, the particles A are polycrystal particles, and a volume average particle size of the particles A is larger than that of the particles B.

7. The secondary battery according to claim 6, wherein the positive electrode film layer further at least meets one of the following characteristics:

   (1) the particles B are polycrystal, monocrystal or quasi-monocrystal particles;
   (2) a primary particle size of the particles A is 50 nm-400 nm, and optionally 80-200 nm; and a primary particle size of the particles B is 150 nm-2 $\mu$m, and optionally 200 nm-1.2 $\mu$m;
   (3) a volume average particle size of the particles A is 2-25 $\mu$m and optionally 2.5-23 $\mu$m; and a volume average particle size of the particles B is 0.65-10 $\mu$m, and optionally 1.2-8.5 $\mu$m;
   (4) a weight ratio of the particles A to the particles B is 5:5-9:1;
   (5) a laser particle size distribution curve of the positive electrode active material has two peaks, and a peak position difference between the two peaks is 3-7 $\mu$m; and
   (6) the positive electrode comprises a positive electrode current collector, and a ratio of a thickness of the positive electrode film layer on a single side to a thickness of the positive electrode current collector is 5.5-15, and optionally 5.6-8.8.

8. The secondary battery according to claim 6 or 7, wherein based on the total moles of transition metal elements in the positive electrode active material, a molar content of element nickel is not less than 80%, optionally, not less than 85%, and further optionally, not less than 90%.

9. The secondary battery according to any one of claims 6 to 8, wherein compositions of the particles A and the particles B each independently satisfy Formula I:

$$Li_{a1}Ni_{x1}Co_{y1}Mn_{z1}M1_{b1}O_2M1'_{c1}, \qquad \text{Formula I}$$

where a1 is 0.8-1.2, x1 is 0.85-1, y1 is 0-0.15, z1 is 0-0.15, b1 is 0-0.02, c1=1-x1-y1-z1-b1, M1 comprises at least one of Zr, Y, Al, Ti, W, Sr, Ta, Sb, Nb, Na, K, B, Mg, Zn, Ca or Ce, and M1' comprises at least one of N, F, S or Cl.

10. The secondary battery according to any one of claims 1 to 5, wherein the positive electrode film layer comprises a positive electrode active material, and the positive electrode active material is monocrystal or quasi-monocrystal particles, and satisfies at least one of the following characteristics:

   (1) a laser particle size distribution curve of the positive electrode active material has a single peak;
   (2) a volume average particle size $D_v50$ of the monocrystal or quasi-monocrystal particles is 1-3.5 $\mu$m, and optionally 1.2-3.0 $\mu$m;
   (3) a laser particle size distribution of the monocrystal or quasi-monocrystal particles meets: $0.3 \leq (D_v99-D_v90)/(2 \times D_v50) \leq 0.55$;
   (4) a composition of the monocrystal or quasi-monocrystal particles is as shown by Formula II:

$$Li_{a2}Ni_{x2}Co_{y2}Mn_{z2}M2_{b2}O_2M2'_{c2}, \qquad \text{Formula II}$$

   where a2 is 0.8-1.2, x2 is 0.85-1, y2 is 0-0.15, z2 is 0-0.15, b2 is 0-0.02, c2=1-x2-y2-z2-b2, M2 comprises at least one of Zr, Y, Al, Ti, W, Sr, Ta, Sb, Nb, Na, K, B, Mg, Zn, Ca or Ce, and M2' comprises at least one of N, F, S or Cl; and optionally, x2 is 0.90-1; and
   (5) the positive electrode comprises a positive electrode current collector, and a ratio of a thickness of the positive electrode film layer on a single side to a thickness of the positive electrode current collector is 4.5-9, and optionally 4.5-8.5.

11. The secondary battery according to any one of claims 1 to 10, further comprising a negative electrode, the negative electrode comprising a negative electrode film layer, the negative electrode film layer comprising a negative electrode active material, the negative electrode active material comprising a silicon-based material, and the silicon-based material comprising one or more of elemental silicon, a silicon oxide material and a silicon-carbon material.

12. The secondary battery according to claim 11, wherein the negative electrode active material further comprising a carbon-based material, and a weight ratio of the carbon-based material to the silicon-based material is not more than 4:6, and optionally not more than 2:8.

13. The secondary battery according to claim 11 or 12, wherein the negative electrode film layer has an areal density of 6-13 mg/cm$^2$.

14. A power consuming apparatus, comprising a secondary battery according to any one of claims 1 to 13.

<u>5</u>

FIG. 1

<u>5</u>

53

52

52

51

FIG. 2

FIG. 3

## INTERNATIONAL SEARCH REPORT

| International application No. |
| --- |
| **PCT/CN2023/089061** |

### A. CLASSIFICATION OF SUBJECT MATTER

H01M10/0525(2010.01)i

According to International Patent Classification (IPC) or to both national classification and IPC

### B. FIELDS SEARCHED

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 密度, 负载率, 涂覆量, 面积容量, 厚膜, 厚涂, 电解液, 有机锂盐, LiFSI, batteries, density, load+, area, capacity, thick, electrolyte, organic, salt

### C. DOCUMENTS CONSIDERED TO BE RELEVANT

| Category* | Citation of document, with indication, where appropriate, of the relevant passages | Relevant to claim No. |
| --- | --- | --- |
| X | CN 103891028 A (ASAHI KASEI CORP.) 25 June 2014 (2014-06-25) description, paragraphs 64-389 | 1-5, 11-14 |
| Y | CN 103891028 A (ASAHI KASEI CORP.) 25 June 2014 (2014-06-25) description, paragraphs 64-389 | 6-10 |
| Y | CN 111384372 A (NINGDE CONTEMPORARY AMPEREX TECHNOLOGY CO., LTD.) 07 July 2020 (2020-07-07) description, paragraphs 4-177 | 6-10 |
| X | JP 2019207757 A (NISSAN MOTOR CO., LTD.) 05 December 2019 (2019-12-05) description, paragraphs 3-141 | 1-5, 11-14 |
| Y | JP 2019207757 A (NISSAN MOTOR CO., LTD.) 05 December 2019 (2019-12-05) description, paragraphs 3-141 | 6-10 |
| X | CN 109526240 A (SOLIDENERGY SYSTEMS) 26 March 2019 (2019-03-26) description, paragraphs 12-148 | 1-5, 11-14 |
| Y | CN 109526240 A (SOLIDENERGY SYSTEMS) 26 March 2019 (2019-03-26) description, paragraphs 12-148 | 6-10 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 June 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/089061**

**C.    DOCUMENTS CONSIDERED TO BE RELEVANT**

| Category* | Citation of document, with indication, where appropriate, of the relevant passages | Relevant to claim No. |
|---|---|---|
| X | CN 115117443 A (ENPOWER ENERGY CO., LTD. et al.) 27 September 2022 (2022-09-27) description, paragraphs 30-60 | 1-5, 11-14 |
| Y | CN 115117443 A (ENPOWER ENERGY CO., LTD. et al.) 27 September 2022 (2022-09-27) description, paragraphs 30-60 | 6-10 |

Form PCT/ISA/210 (second sheet) (July 2022)

**INTERNATIONAL SEARCH REPORT**
Information on patent family members

| International application No. |
| --- |
| **PCT/CN2023/089061** |

| Patent document cited in search report | | | Publication date (day/month/year) | Patent family member(s) | | | Publication date (day/month/year) |
| --- | --- | --- | --- | --- | --- | --- | --- |
| CN | 103891028 | A | 25 June 2014 | US | 2014255796 | A1 | 11 September 2014 |
| | | | | US | 10644353 | B2 | 05 May 2020 |
| | | | | WO | 2013062056 | A1 | 02 May 2013 |
| | | | | EP | 2772981 | A1 | 03 September 2014 |
| | | | | EP | 2772981 | A4 | 08 April 2015 |
| | | | | EP | 2772981 | B1 | 21 October 2020 |
| | | | | KR | 20140072105 | A | 12 June 2014 |
| | | | | KR | 101551135 | B1 | 07 September 2015 |
| | | | | JP | 2017054822 | A | 16 March 2017 |
| | | | | JP | 6427544 | B2 | 21 November 2018 |
| | | | | JPWO | 2013062056 | A1 | 02 April 2015 |
| | | | | JP | 6120772 | B2 | 26 April 2017 |
| | | | | TW | 201322528 | A | 01 June 2013 |
| | | | | TWI | 472083 | B | 01 February 2015 |
| CN | 111384372 | A | 07 July 2020 | WO | 2020134781 | A1 | 02 July 2020 |
| | | | | EP | 3800710 | A1 | 07 April 2021 |
| | | | | EP | 3800710 | A4 | 28 July 2021 |
| | | | | EP | 3800710 | B1 | 15 February 2023 |
| | | | | US | 2021126242 | A1 | 29 April 2021 |
| | | | | US | 11177468 | B2 | 16 November 2021 |
| JP | 2019207757 | A | 05 December 2019 | JP | 7040290 | B2 | 23 March 2022 |
| CN | 109526240 | A | 26 March 2019 | US | 2019260066 | A1 | 22 August 2019 |
| | | | | US | 11245133 | B2 | 08 February 2022 |
| | | | | SG | 11201810610 | XA | 28 December 2018 |
| | | | | TW | 201813176 | A | 01 April 2018 |
| | | | | WO | 2017214276 | A1 | 14 December 2017 |
| | | | | JP | 2019517722 | A | 24 June 2019 |
| | | | | KR | 20190042542 | A | 24 April 2019 |
| | | | | EP | 3469648 | A1 | 17 April 2019 |
| | | | | EP | 3469648 | A4 | 17 June 2020 |
| | | | | EP | 3469648 | B1 | 26 January 2022 |
| CN | 115117443 | A | 27 September 2022 | None | | | |

Form PCT/ISA/210 (patent family annex) (July 2022)